# EUROPEAN PATENT SPECIFICATION

(11) **EP 4 212 065 B1**
(45) Date of publication and mention of the grant of the patent: **19.11.2025**
(21) Application number: 22854459.9
(22) Date of filing: 22.09.2022
(51) Int. Cl.: A47B 47/00, A63H 33/10, A01K 1/02

(54) **MODULAR STRUCTURE WITH PRESS-FIT ASSEMBLY**
MODULARE STRUKTUR MIT EINPRESSANORDNUNG
STRUCTURE MODULAIRE À ASSEMBLAGE PAR EMBOÎTEMENT SOUS PRESSION

(30) Priority: 03.12.2021 ES 202132406 U
(43) Date of publication of application: 19.07.2023
(73) Proprietor: Artola Angeles, Manuel, 08016 Barcelona (Barcelona) (ES)
(72) Inventor: Artola Angeles, Manuel, 08016 Barcelona (Barcelona) (ES)
(74) Representative: Espiell Gomez, Ignacio
(86) International application number: PCT/ES2022/070607
(87) International publication number: WO 2023/099798

(56) References cited:
- EP-A1- 0 034 464
- WO-A1-2011/003417
- DE-A1- 2 226 629
- DE-U1- 20 312 800
- KR-A- 20160 015 024
- KR-Y1- 200 352 100
- US-A1- 2004 068 946
- US-A1- 2009 223 972
- US-A1- 2012 294 675

## Description

### OBJECT OF THE INVENTION

The invention, as stated in the title of this specification, refers to a modular structure with snap-in assembly contributing to the function to which it is designed with advantages and characteristics that are disclosed in detail thereafter.

The object of this invention refers to a modular structure of demountable parts according to claim 1.

In other words, when the modular part to be joined with the complementary perforation provided at a corner is inserted between the essentially parallel walls of the assembling element, the protrusion allows the entrance of the modular part until the protrusion of the assembling element is tightly fitting in the complementary perforation of the modular part. To disengage the modular part with respect to the assembling element, it shall be sufficient to press on the protrusion through an opening or a cut pierced coinciding with it in the wall opposite to the protrusion of the assembling element.

This way, the assembly element allows to join, preferably perpendicularly, successive modular parts, for example panels, to mount dismountable structures of different type, for example, shelves, construction games, etc.

### FIELD OF APPLICATION OF THE INVENTION

The field of application of this invention is within the sector of the industry engaged in the manufacture of accessories for dismountable modular structures, particularly focusing on the snap-in elements for that type of structure, encompassing sectors such as that of furniture, toys, structures for pets or others.

### BACKGROUND OF THE INVENTION

In the market, different types of dismountable modular structures are known that are joined to each other to form every type of elements.

In general, these structures, for example, based on panels, use to be mounted by joining the different parts by screwing them, for which the use of tools is required, in addition to the screws and nuts themselves, as well as spending enough time to carry out mounting or dismounting each junction, as each of the screws has to be screwed

In addition, depending on the material of which they are made, the panels themselves shall be little reusable due to the holes successive screwing will leave.

Other systems of dismountable modular structures that can be found, that seeks a quick mounting, are systems that are simply assembled with elements that exert some pressure, for example, based on lugs, but that are easily loosened and released, providing little stability when the structure has a given size.

Document US2009223972A1 discloses a modular component container system includes a plurality of case walls and a plurality of connectors and it corresponds to the preamble of claim 1.

The objective of this invention, therefore, is to provide an improved snap-in assembling system to join parts of modular structures without using tools is required and that allows easily mounting and dismounting them, and without damaging them.

### EXPLANATION OF THE INVENTION

The modular structure with snap-in assembly that the invention proposes is configured as the suitable solution to the above-mentioned objective, the characterizing details making it possible and that duly distinguish it appearing in the final claims attached to this description.

Concretely, what the invention proposes, as it was said before, is a modular structure of dismountable parts that is distinguished in that the wall with the protrusion, temporarily deforms upon insertion of the modular part between the walls.

For this, the said element is constituted by a body that comprises narrow recesses, defined by the space existing between two walls substantially parallel to each other, inside which a protrusion appears, preferably wedge-shaped, which is dimensioned to tightly fit in a complementary perforation provided to that effect in an area of the modular part to be joined, close to its edge and that, in turn, is tightly fitting between the walls that define the recess, so that, when inserting the said area of the modular part to be joined in the recess of the assembling element and pressing to overcome the thickness that the protrusion determines, making that the said protrusion fit in the said perforation, the part remains locked by the said protrusion and, consequently , remains tightly joined to the assembling element.

It is important to point out that the protrusion fitting inside the recess of the assembly element in the perforation of the part to be joined shall preferably occur thanks to the fact that the inclined surface of the protrusion is oriented with its less high part towards the external part of the recess, so that, when inserting the part from that external part with its edge, a push occurs on the said inclined surface provoking the deformation of the material in the wall of the assembling element that incorporates the protrusion until it is exceeded and remains coincident with the perforation, a moment when the pressure will no longer exist and it will return to its initial shape.

In addition, it shall be easily identifiable that the junction correctly occurred when hearing a click produced when exceeding the higher point of the protrusion and this later penetrating in the perforation.

On its side, to achieve dismounting the part, on the wall of the assembling element opposite to the one incorporating the protrusion, coinciding with the position of the said protrusion, the existence of an opening has been provided adapted to allow inserting a finger and be able to exert pressure through it and through the perforation of the part inserted in the recess on the protrusion, so that, thanks to the said pressure, the material of the wall with the protrusion slightly collapses and this latter can go out of its embedment in the perforation, allowing at that point to pull the part out of the recess and, consequently, to separate the part of the assembling element also without using tools is required. However, the possibility is not discarded of being able to use some instrument, for example, a small stick, to press on the protrusion instead of the finger, especially if the thickness of the modular part requires it so.

The protrusion is inside the recess of the assembling element and the perforation of the area close to the edge of the part in which it snap-in have a circular configuration. And, likewise, in the preferred embodiment, the opening of the assembling element provided in the wall opposite to the protrusion to allow the disengagement of the protrusion, also has a circular configuration.

The recess described defined by the space existing between the two substantially parallel walls of the assembling element presents a corner-shaped configuration, being adapted to receive a corner of the modular part to be joined close to which the perforation was provided were the protrusion is fitted.

Anyway, the assembling element can possess multiple recesses arranged on different planes, perpendicular, to be able to join multiple modular parts.

This way, the assembling element allows to join, preferably perpendicularly, successive modular parts, especially panels, to mount dismountable structures of different types, for example shelves, furniture, display stands, construction games for children, game structures for cats or other pets, etc. contemplating in each case the use of a suitable material to stand the strains required, as well as different types of finish.

The advantage of the assembling element of the structure object of this invention is suppressing any type of tool or accessory (screwdriver, hammer), as it operates with a single snap-in, without having to use a great effort because the two parts fit perfectly.

In addition, it is a system of easy union and funny mounting thanks to the click sound that warns of the correct placement and that indicates that it can be passed to the following assembly being fully sure that the recently placed is perfectly fit and fixed.

In conclusion, it is a system so easy to mount and dismount that even a child can do, therefore, a possible application of the assembling element contemplates the construction games for children.

### DESCRIPTION OF THE DRAWINGS

To complement the description being carried out and in order to assist to best understand the characteristics of the invention, attached to this specification, as an integral part thereof, there is a set of drawings in which, for illustration and no limitation purpose, the following has been represented:
The figures numbers 1 and 2.- They show both side perspective and top plan views, respectively, of an example of the assembling element not forming part of the invention that comprises the modular structure object of the invention, in a basic variant thereof, its configuration and essential parts can be seen;
the figures number 3 and 4.- They show both perspective views of the coupling steps of the assembling element not forming part of the invention with the perforated corner of part of modular structure of the invention, the manner of inserting it in the recess of the protrusion, in this case wedge-shaped, can be seen;
the figure number 5.- It shows a perspective view of an embodiment of a portion of the modular structure with assembly by snap-in, object of the invention, in this case, an example with assembling element provided with three perpendicular recesses in three different plans of the space showing the corners of the three modular parts that allows to join them;

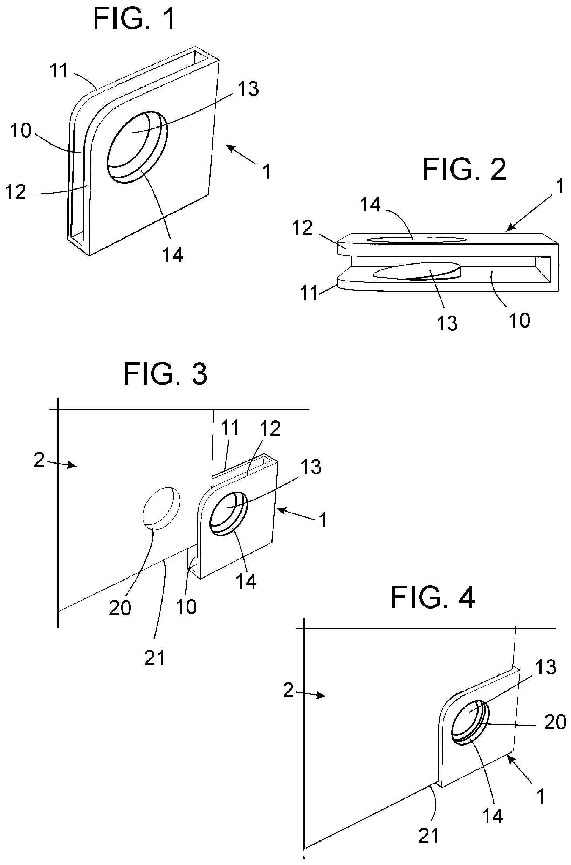

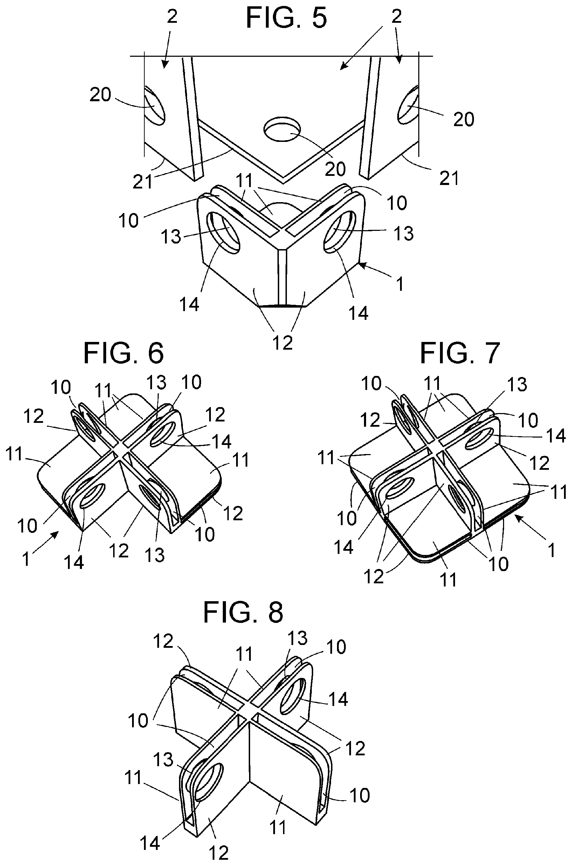

the figures 6, 7 and 8.- They show respective perspective views of three other options of embodiment of the assembling element of the modular structure of the invention with different number of recesses with protrusion;
the figure number 9.- It shows a perspective view of another embodiment of the assembling element of the modular structure of the invention, in this case with recesses having a larger width;
the figure number 10.- It shows a perspective view of another embodiment of the assembling element of the modular structure of the invention, in this case with an open cut instead of a through opening in the wall opposite to the protrusion to insert the finger or another dismounting element;
the figure number 11.- It shows a perspective view of another embodiment of the assembling element of the modular structure of the invention, in this case with the wall opposite to the blind protrusion, that means, without opening nor cut to insert the finger or another dismounting element;
the figure number 12.- It shows a perspective view of another example of the modular structure not forming part of the invention, in this case with the protrusion in the part to be joined and the perforation in the assembling element; and
the figure number 13.- It shows a perspective view of an example of embodiment of the modular structure with assembly by snap-in according to the invention, in this case represented after it was mounted.

### PREFERRED EMBODIMENT OF THE INVENTION

Seen the said figures, and according to the numerals adopted, non-limiting examples of embodiment of the modular structure by snap-in of the invention can be seen, which comprises what is described in detail below

As it can be seen in the said figures, the modular structure (3) of the invention comprises:
- three or more modular parts (2) to be joined each possessing, at least, a perforation (20) located close to one of its edges (21); and - one or more assembling elements (1) provided with, at least, three recesses (10) in perpendicular planes each with, at least, one protrusion (13) in which the perforations (20) the modular parts (2) complementarily fit when inserting said modular parts (2) by the edge (21) in any of the said recesses (10), so that the complementary fitting of the protrusion (13) in the perforation (20) allows to join the parts (2) by snap-in to the assembling element or elements (1) without using tools.

The modular part or parts (2) to be joined are those possessing , at least, one perforation (20) close to one of its edges (21) and the assembling element or elements (1) are those that are provided with, at least, an internal protrusion (13) in the, at least, one recess (10) to join the part or parts (2) by snap-in of the said protrusion (13) in the perforation (20) , as it is shown in the examples of the figures 5 to 11.

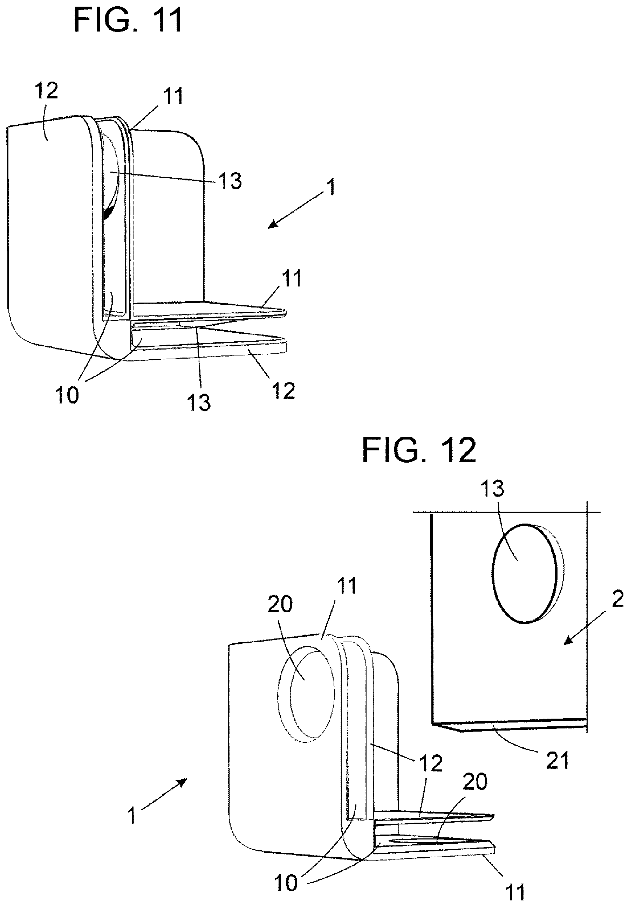

However, as it can be seen in the figure 12, in an example not forming part of the invention, the modular part or parts (2) to be joined are those that possess, at least, a protrusion (13) close to one of its edges (21) and the assembling element or elements (1) are those that are provided with, at least, one internal perforation (20) in, a least, one recess (10).

In any case, the modular part or parts (2) are flat, at least in part, and the assembling element (1) is constituted by a body that comprises one, two or more recesses (10) defined by the space existing between two walls (11,12) substantially parallel to each other of the said body, inside of which it possesses, at east, one protrusion (13) or a perforation (20).

Preferably, the said protrusion (13) is defined by a wedge having an inclined surface which, when it is in the assembling element (1), emerges in the internal face of a first wall (11) oriented with the less high part towards outside the recess (10) and, when it is in the modular part (2), it emerges from the surface of one of its faces oriented with the less high part towards the edge (21).

Anyway, the protrusion (13) is dimensioned to tightly fit in, at least, one complementary perforation (20). And the said perforation (20) or protrusion (13) shall be provided in a flat area of the modular part (2) to be joined close to its edge (21), an area that, in turn, fit tightly between the walls (11, 12) that define the recess (10) of the body of the assembling element (1) and when it is inserted in the said recess (10) pressing to overcome the high surface of the protrusion (13), the perforation (20) remains coinciding with the said protrusion (13) and this latter remains fitted in the perforation (20) provoking the junction of the modular part (2) with the body (1) of the assembling element.

When the modular part (2) is inserted between the walls (11, 12), the wall (11) with the protrusion (13), shall be temporarily deformed, that means it shall bend, to overcome the high surface of the protrusion (13) and thus allowing the modular part (2) passes.

In addition, in a second wall (12) of the assembling element (1) or wall opposite to the first wall (11) that incorporates the protrusion (13), coinciding with the position of the said protrusion (13) , the existence of an opening (14) has been provided adapted to allow inserting a finger or other element and be able to exert pressure through it or through the perforation (20) of the part (2) inserted in the recess (10) on the protrusion (13), to achieve dismounting the part (2) without the use of tools is required.

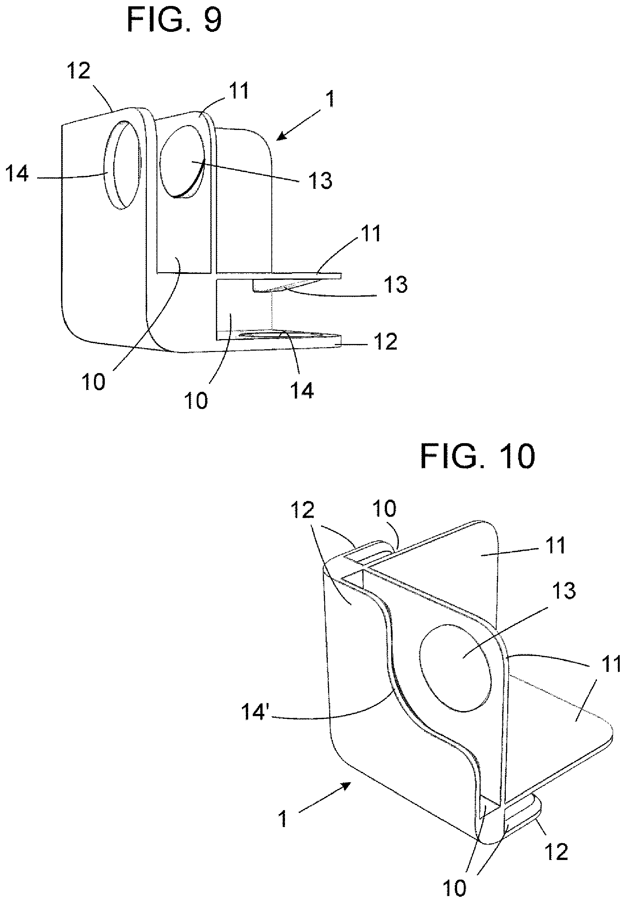

Optionally, as it can be seen in the figure 10, in the second wall (12) of the assembling element (1) opposite to the first wall (11), instead of the said opening (14), an open cut (14') has been provided that encompasses, at least, the position of the protrusion (13), allowing also and in an easier manner to insert a finger or another element and be able to exert pressure through the perforation (20) of the part (2) inserted in the recess (10) on the protrusion (13), to achieve dismounting the part (2) without using tools.

Anyway, preferably, the protrusion (13) inside the recess (10) of the assembling element (1) and the perforation (20) of the area close to the edge (21) of the part (2) to be joined in which the said protrusion (13) snaps-in are in both cases elements having a circular configuration.

Likewise, in a preferred embodiment, the opening (14) of the assembling element (1) provided in the wall (12) opposite to the protrusion (13) to press on it and achieve the disengagement from the perforation (20) of the part (2), has also a circular configuration.

Anyway, in a preferred embodiment, the recess or recesses (10) of the assembling element (1) defined by the space existing between the two substantially parallel walls (11, 12), that preferably are all identical, present a slot-like narrow configuration and internally having the shape of a corner, adapted to tightly fit receive an area with edge (21) in the corner of a modular part (2) where, preferably , a perforation has been provided (20) complementary to the protrusion (13) inside it.

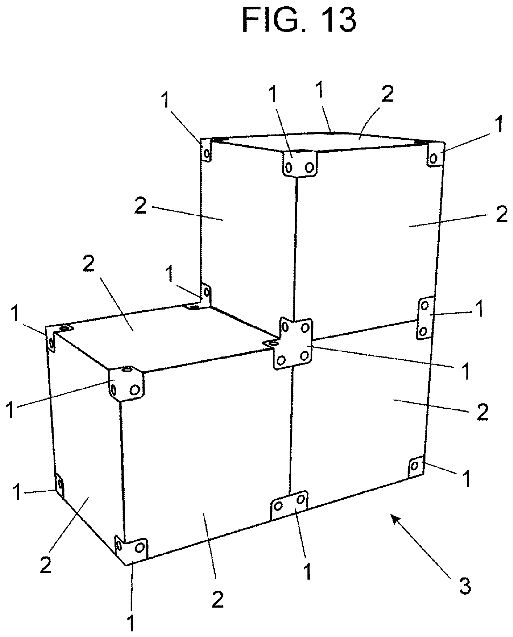

The assembling element (1) presents
multiple recesses (10), from multiple pairs of walls (11, 12) substantially parallel, arranged by pairs on different planes that define respective recesses (10) arranged, in turn, on different planes, on perpendicular planes between adjacent pairs, as it can be seen in the examples of the figures 5 to 11, allowing thus to join multiple modular parts (2) and form all types of structures (3) of different kind, such as for example the one appearing in the figure 13 where, in a non-limiting embodiment, the modular parts (2) are quadrangular panels.

In addition, although in preferred embodiment, when it possesses several, all the recesses (10) of the assembling element (1) are identical, in other embodiments, the said recesses (10) can have a different width (a).

Last, it shall be pointed out that the body forming the assembling element (1) can be made of different materials, depending on the type and size of the structure to which it is designed. In addition, it can be constituted by a monobloc part of a same material or by several parts, of a same or different material, joined in turn, integral to each other, anyway with the necessary strength to stand the strains of the type of modular structure (3) to which it is designed.

On their side, the panels (2) to be joined with the assembling element (1), preferably, consist of flat or laminar parts having a quadrangular or polygonal configuration , of any material , with one or more perforations (20) in one, several or all its areas of edges (21) with corners, being applicable, for example and without that means a limitation, to form a modular structure (3) that can consist of a shelves furniture, a cubic furniture, in a children construction game or in a game structure for pets.

Sufficiently disclosed the nature of this invention, as well as the manner of implementing it, it is not deemed necessary to extend anymore its explanation in order that any person skilled in the art understands its extends and the advantages arising from it.

## Claims

1. Modular structure with snap-in assembly comprising: - three or more modular parts (2) to be joined each possessing, at least, a perforation (20) located close to one of its edges (21); and - one or more assembling elements (1) provided with, at least, three recesses (10) in perpendicular planes each with, at least, one protrusion (13) in which the perforations (20) of the modular parts (2) complementarily fit when inserting said modular parts (2) by the edge (21) in any of the said recesses (10), so that the complementary fitting of the protrusion (13) in the perforation (20) allows to join the parts (2) by snap-in to the assembling element or elements (1) without using tools, wherein the modular parts (2) are flat, at least in part, close to the edge (21) where they incorporate the perforation (20) and the assembling element (1) is constituted from a body that comprises three or more recesses (10) each defined by the space existing between two walls (11,12) of the said body substantially parallel to each other, inside which it possesses, the at least, one protrusion (13), wherein the wall (11) with the protrusion (13) has a corner-shaped configuration and defines a corner-shaped space between the two walls (11,12) adapted to tightly fit receive an area with edge (21) in the corner of a modular part (2), and **characterised in that** the wall (11) with the protrusion (13) temporarily deforms upon insertion of the modular part (2) between the walls (11, 12).

2. Modular structure with snap-in assembly according to claim 1, wherein the said protrusion (13) is defined by a wedge having an inclined surface which emerges in the internal face of a first wall (11) oriented with the less high part towards outside the recess (10).

3. Modular structure with snap-in assembly according to any of the previous claims, wherein the protrusion (13) is dimensioned to tightly fit in, at least, one complementary perforation (20); and in that a flat area of the modular part (2) tightly fits between the walls (11, 12) that define the recess (10) of the body of the assembling element (1).

4. Modular structure with snap-in assembly according to any of the previous claims, wherein in a second wall (12) of the assembling element (1) opposite to the first wall (11) coinciding with the position of the protrusion (13) the existence of an opening (14) has been provided adapted to allow inserting a finger or other element and be able to exert pressure through it or through the perforation (20) of the part (2) inserted in the recess (10) on the protrusion (13), to achieve dismounting the part (2) without the use of tools is required.

5. Modular structure with snap-in assembly according to any of the previous claims, wherein in the second wall (12) of the assembling element (1) opposite to the first wall (11), an open cut (14') has been provided that encompasses, at least, the position of the protrusion (13), allowing to insert a finger or another element and be able to exert pressure through the perforation (20) of the part (2) inserted in the recess (10) on the protrusion (13), to achieve dismounting the part (2) without using tools.

6. Modular structure with snap-in assembly according to any of the preceding claims, wherein the protrusion (13) and the perforation (20) have a circular configuration.

7. Modular structure with snap-in assembly according to any of the preceding claims, wherein the recesses (10) of the assembling element present a slot-like narrow configuration and internally have the shape of a corner, adapted to tightly fit receive an area with edge (21) in the corner of a modular part (2).

8. Modular structure with snap-in assembly according to any of the preceding claims, wherein the assembling element (1) possesses multiple recesses (10) arranged on different planes.

9. Modular structure with snap-in assembly according to any of the preceding claims, wherein all the recesses (10) of the assembling element (1) are identical.

10. Modular structure with snap-in assembly according to any of claims 1 to 8, wherein some recesses (10) of the assembling element (1) have a different width (a).

11. Modular structure with snap-in assembly according to any of the preceding claims, wherein the parts (2) are constituted by flat or laminar parts having a quadrangular or polygonal configuration with one or more perforations (20) in one, several or all their areas of edge (21) with corners (a).

## Patentansprüche

1. Modulare Struktur mit Einrastmontage, umfassend: - drei oder mehr zu verbindende modulare Teile (2), die jeweils mindestens eine Perforation (20) in der Nähe eines ihrer Kanten (21) aufweisen; und - ein oder mehrere Montageelemente (1), die mit mindestens drei Ausnehmungen (10) in senkrechten Ebenen versehen sind, die jeweils mindestens einen Vorsprung (13) aufweisen, in den die Perforationen (20) der modularen Teile (2) komplementär passen, wenn die modularen Teile (2) mit der Kante (21) in eine der Ausnehmungen (10) eingeführt werden, so dass die komplementäre Passung des Vorsprungs (13) in die Perforation (20) die Verbindung der Teile (2) durch Einrasten in das oder die Montageelemente (1) ohne Verwendung von Werkzeugen ermöglicht, wobei die modularen Teile (2) zumindest teilweise in der Nähe der Kante (21), an der sie die Perforation (20) aufweisen, flach sind und das Montageelement (1) aus einem Körper besteht, der drei oder mehr Ausnehmungen (10) umfasst, die jeweils durch den Raum zwischen zwei im Wesentlichen parallel zueinander verlaufenden Wänden (11, 12) des Körpers definiert sind, in deren Innerem sich mindestens ein Vorsprung (13) befindet, wobei die Wand (11) mit dem Vorsprung (13) eine eckförmige Konfiguration aufweist und einen eckförmigen Raum zwischen den beiden Wänden (11, 12) definiert, der geeignet ist, einen Bereich mit einer Kante (21) in der Ecke eines modularen Teils (2) passgenau aufzunehmen, und **dadurch gekennzeichnet, dass** sich die Wand (11) mit dem Vorsprung (13) beim Einsetzen des modularen Teils (2) zwischen die Wände (11, 12) vorübergehend verformt.

2. Modulare Struktur mit Einrastmontage nach Anspruch 1, wobei der Vorsprung (13) durch einen Keil mit einer geneigten Fläche gebildet wird, der in die Innenfläche einer ersten Wand (11) eintritt, und dessen weniger hoher Teil nach außen zur Ausnehmung (10) zeigt.

3. Modulare Struktur mit Einrastmontage nach einem der vorhergehenden Ansprüche, wobei der Vorsprung (13) so dimensioniert ist, dass er eng in mindestens eine komplementäre Perforation (20) passt; und wobei ein flacher Bereich des modularen Teils (2) genau zwischen die Wände (11, 12) passt, die die Ausnehmung (10) des Körpers des Montageelements (1) bilden.

4. Modulare Struktur mit Einrastmontage nach einem der vorhergehenden Ansprüche, wobei in einer zweiten Wand (12) des Montageelements (1), die der ersten Wand (11) gegenüberliegt und mit der Position des Vorsprungs (13) zusammenfällt, eine Öffnung (14) vorgesehen ist, die geeignet ist, das Einführen eines Fingers oder eines anderen Elements zu ermöglichen und durch sie oder durch die Perforation (20) des in die Ausnehmung (10) auf dem Vorsprung (13) eingeführten Teils (2) Druck ausüben zu können, um eine Demontage des Teils (2) ohne Verwendung von Werkzeugen zu erreichen.

5. Modulare Struktur mit Einrastmontage nach einem der vorhergehenden Ansprüche, wobei in der der ersten Wand (11) gegenüberliegenden zweiten Wand (12) des Montageelements (1) ein offener Schnitt (14') vorgesehen ist, der mindestens die Position des Vorsprungs (13) umfasst und es ermöglicht, einen Finger oder ein anderes Element einzuführen und durch die Perforation (20) des in die Ausnehmung (10) eingeführten Teils (2) Druck auf den Vorsprung (13) auszuüben, um die Demontage des Teils (2) ohne Verwendung von Werkzeugen zu erreichen.

6. Modulare Struktur mit Einrastmontage nach einem der vorhergehenden Ansprüche, wobei der Vorsprung (13) und die Perforation (20) kreisförmig ausgebildet sind.

7. Modulare Struktur mit Einrastmontage nach einem der vorhergehenden Ansprüche, wobei die Ausnehmungen (10) des Montageelements schlitzartig schmal ausgebildet sind und innen die Form einer Ecke haben, die geeignet ist, einen Bereich mit einer Kante (21) in der Ecke eines modularen Teils (2) passgenau aufzunehmen.

8. Modularer Aufbau mit Einrastmontage nach einem der vorhergehenden Ansprüche, wobei das Montageelement (1) mehrere auf unterschiedlichen Ebenen angeordnete Ausnehmungen (10) aufweist.

9. Modularer Aufbau mit Einrastmontage nach einem der vorhergehenden Ansprüche, wobei alle Ausnehmungen (10) des Montageelements (1) identisch sind.

10. Modulare Struktur mit Schnappmontage nach einem der Ansprüche 1 bis 8, wobei einige Ausnehmungen (10) des Montageelements (1) eine unterschiedliche Breite (a) aufweisen.

11. Modulare Struktur mit Einrastmontage nach einem der vorhergehenden Ansprüche, wobei die Teile (2) aus flachen oder laminaren Teilen bestehen, die eine viereckige oder polygonale Konfiguration mit einer oder mehreren Perforationen (20) in einem, mehreren oder allen ihren Kantenbereichen (21) mit Ecken (a) aufweisen.

## Revendications

1. Structure modulaire avec assemblage par encliquetage comprenant : - trois parties modulaires (2) ou plus à joindre, chacune possédant, au moins, une perforation (20) située proche de l'un de ses bords (21) ; et - un élément d'assemblage (1) ou plus pourvu de, au moins, trois évidements (10) dans des plans perpendiculaires, chacun comportant, au moins, une saillie (13) dans laquelle les perforations (20) des parties modulaires (2) s'ajustent de manière complémentaire lors de l'insertion desdites parties modulaires (2) par le bord (21) dans l'un quelconque desdits évidements (10), de sorte que l'ajustement complémentaire de la saillie (13) dans la perforation (20) permet de joindre les parties (2) par encliquetage à l'élément ou aux éléments d'assemblage (1) sans utiliser d'outils, dans laquelle les parties modulaires (2) sont plates, au moins en partie, proche du bord (21) où elles intègrent la perforation (20) et l'élément d'assemblage (1) est constitué d'un corps qui comprend trois évidements (10) ou plus définis chacun par l'espace existant entre deux parois (11, 12) dudit corps sensiblement parallèles l'une à l'autre, à l'intérieur duquel il possède, l'au moins, une saillie (13), dans laquelle la paroi (11) avec la saillie (13) a une configuration en forme de coin et définit un espace en forme de coin entre les deux parois (11, 12) adapté pour ajuster étroitement une zone avec un bord (21) dans le coin d'une partie modulaire (2), et **caractérisée en ce que** la paroi (11) avec la saillie (13) se déforme temporairement lors de l'insertion de la partie modulaire (2) entre les parois (11, 12).

2. Structure modulaire avec assemblage par encliquetage selon la revendication 1, dans laquelle ladite saillie (13) est définie par une cale ayant une surface inclinée qui émerge dans la face interne d'une première paroi (11) orientée avec la partie la moins haute vers l'extérieur de l'évidement (10).

3. Structure modulaire avec assemblage par encliquetage selon l'une quelconque des revendications précédentes, dans laquelle la saillie (13) est dimensionnée pour s'ajuster étroitement dans, au moins, une perforation (20) complémentaire ; et en ce qu'une zone plate de la partie modulaire (2) s'ajuste étroitement entre les parois (11, 12) qui définissent l'évidement (10) du corps de l'élément d'assemblage (1).

4. Structure modulaire avec assemblage par encliquetage selon l'une quelconque des revendications précédentes, dans laquelle dans une seconde paroi (12) de l'élément d'assemblage (1) opposée à la première paroi (11) coïncidant avec la position de la saillie (13) l'existence d'une ouverture (14) a été fournie adaptée pour permettre d'insérer un doigt ou un autre élément et pour être apte à exercer une pression à travers celle-ci ou à travers la perforation (20) de la partie (2) insérée dans l'évidement (10) sur la saillie (13), pour obtenir le démontage de la partie (2) sans que l'utilisation d'outils ne soit requise.

5. Structure modulaire avec assemblage par encliquetage selon l'une quelconque des revendications précédentes, dans laquelle dans la seconde paroi (12) de l'élément d'assemblage (1) opposée à la première paroi (11), une découpe ouverte (14') a été fournie qui englobe, au moins, la position de la saillie (13), permettant d'insérer un doigt ou un autre élément et d'être apte à exercer une pression à travers la perforation (20) de la partie (2) insérée dans l'évidement (10) sur la saillie (13), pour obtenir le démontage de la partie (2) sans l'utilisation d'outils.

6. Structure modulaire avec assemblage par encliquetage selon l'une quelconque des revendications précédentes, dans laquelle la saillie (13) et la perforation (20) ont une configuration circulaire.

7. Structure modulaire avec assemblage par encliquetage selon l'une quelconque des revendications précédentes, dans laquelle les évidements (10) de l'élément d'assemblage présentent une configuration étroite de type fente et ont, à l'intérieur, la forme d'un coin, adapté pour ajuster étroitement une zone avec bord (21) dans le coin d'une partie modulaire (2).

8. Structure modulaire avec assemblage par encliquetage selon l'une quelconque des revendications précédentes, dans laquelle l'élément d'assemblage (1) possède de multiples évidements (10) agencés sur différents plans.

9. Structure modulaire avec assemblage par encliquetage selon l'une quelconque des revendications précédentes, dans laquelle tous les évidements (10) de l'élément d'assemblage (1) sont identiques.

10. Structure modulaire avec assemblage par encliquetage selon l'une quelconque des revendications 1 à 8, dans laquelle certains évidements (10) de l'élément d'assemblage (1) ont une largeur (a) différente.

11. Structure modulaire avec assemblage par encliquetage selon l'une quelconque des revendications précédentes, dans laquelle les parties (2) sont constituées par des parties plates ou laminaires ayant une configuration quadrangulaire ou polygonale avec une ou plusieurs perforations (20) dans l'une, plusieurs ou toutes leurs zones de bord (21) avec les coins (a).
